# EUROPÄISCHE PATENTANMELDUNG

(11) **EP 4 654 240 A1**
(43) Veröffentlichungstag der Anmeldung: **26.11.2025**
(21) Anmeldenummer: 25170287.4
(22) Anmeldetag: 14.04.2025
(51) Int. Cl.: H01H 85/12, H02H 3/093, H02H 3/087, H02H 3/05, H02H 3/06

(54) **SICHERUNGSANORDNUNG FÜR EINEN GLEICHSTROMPFAD**

(30) Priorität: 22.05.2024 DE 102024204698
(71) Anmelder: Siemens Energy Global GmbH & Co. KG, 81739 München (DE)
(72) Erfinder: Dorn, Jörg, 96155 Buttenheim (DE); Ergin, Dominik, 91074 Herzogenaurach (DE); Schacherer, Christian, 92364 Deining (DE)

(57) **Zusammenfassung**

Die Erfindung betrifft eine Sicherungsanordnung (1) für einen Gleichstrompfad (3). Die Sicherungsanordnung (1) umfasst parallelgeschaltete Sicherungseinheiten (5), die jeweils eine Reihenschaltung eines Sicherungsgliedes (9) und wenigstens eines Schaltgliedes (11) aufweisen. Jedes Sicherungsglied (9) ist eingerichtet, einen Strompfad (7) seiner Sicherungseinheit (5) dauerhaft zu unterbrechen, nachdem eine Stromstärke eines in dem Strompfad (7) fließenden Stroms einen Stromschwellenwert oder ein Grenzlastintegral dieses Stroms einen Grenzlastschwellenwert überschritten hat. Jedes Schaltglied (11) jeder Sicherungseinheit (5) weist einen ersten Schaltzustand, in dem das Schaltglied (11) den Strompfad (7) der Sicherungseinheit (5) unterbricht, und einen zweiten Schaltzustand, in dem das Schaltglied (11) den Strompfad der Sicherungseinheit (5) nicht unterbricht, auf. Eine Steuereinheit (13) der Sicherungsanordnung (1) ist eingerichtet, die Schaltzustände der Schaltglieder (11) aller Sicherungseinheiten (5) derart zu steuern, dass sich alle Schaltglieder (11) höchstens einer Sicherungseinheit (5), deren Strompfad (7) nicht durch ihr Sicherungsglied (9) unterbrochen ist, gleichzeitig in ihrem zweiten Schaltzustand befinden.

## Beschreibung

Die Erfindung betrifft eine Sicherungsanordnung für einen Gleichstrompfad.

Unter einem Gleichstrompfad wird hier ein Strompfad eines elektrischen Gleichstroms verstanden. Um einen Gleichstrompfad vor zu hohen elektrischen Strömen zu schützen, werden Überstromschutzeinrichtungen verwendet, die den Gleichstrompfad unterbrechen, beispielsweise wenn eine Stromstärke eines in dem Gleichstrompfad fließenden elektrischen Stroms einen Stromschwellenwert oder ein Grenzlastintegral dieses Stroms einen Grenzlastschwellenwert überschreitet. Das Grenzlastintegral eines Stroms ist das Integral des Quadrats der Stromstärke des Stroms über eine vorgegebene Zeitdauer. Eine derartige Überstromschutzeinrichtung wird häufig bei dem Unterbrechen des Gleichstrompfades zerstört. Beispielsweise weist eine Überstromschutzeinrichtung eine Schmelzsicherung auf, die den Gleichstrompfad durch Schmelzen eines Schmelzleiters unterbricht. Um nach dem Unterbrechen des Gleichstrompfades durch eine derartige Überstromschutzeinrichtung den Gleichstrompfad wieder in Betrieb zu nehmen, muss die zerstörte Überstromschutzeinrichtung ersetzt werden. Die Ersetzung der zerstörten Überstromschutzeinrichtung kann, je nach den Gegebenheiten, viel Zeit beanspruchen, beispielsweise wenn sich der Gleichstrompfad auf einer unbemannten Offshore-Station befindet, zu der erst Personal befördert werden muss, um die Überstromschutzeinrichtung zu ersetzen.

Der Erfindung liegt die Aufgabe zugrunde, eine Sicherungsanordnung für einen Gleichstrompfad anzugeben, die insbesondere hinsichtlich der Einsatzbereitschaft des Gleichstrompfades nach dessen Unterbrechen durch die Sicherungsanordnung verbessert ist.

Die Aufgabe wird erfindungsgemäß durch eine Sicherungsanordnung mit den Merkmalen des Anspruchs 1 gelöst.

Vorteilhafte Ausgestaltungen der Erfindung sind Gegenstand der Unteransprüche.

Eine erfindungsgemäße Sicherungsanordnung für einen Gleichstrompfad umfasst
- mehrere elektrisch parallel zueinander geschaltete Sicherungseinheiten, die jeweils einen Strompfad mit einer Reihenschaltung eines Sicherungsgliedes und wenigstens eines Schaltgliedes aufweisen, und
- eine Steuereinheit, wobei
- das Sicherungsglied jeder Sicherungseinheit eingerichtet ist, den Strompfad der Sicherungseinheit dauerhaft zu unterbrechen, nachdem eine Stromstärke eines in dem Strompfad fließenden elektrischen Stroms einen ersten Stromschwellenwert oder ein Grenzlastintegral dieses Stroms einen ersten Grenzlastschwellenwert überschritten hat,
- jedes Schaltglied jeder Sicherungseinheit einen ersten Schaltzustand, in dem das Schaltglied den Strompfad der Sicherungseinheit unterbricht, und einen zweiten Schaltzustand, in dem das Schaltglied den Strompfad der Sicherungseinheit nicht unterbricht, aufweist, und
- die Steuereinheit eingerichtet ist, die Schaltzustände der Schaltglieder aller Sicherungseinheiten derart zu steuern, dass sich alle Schaltglieder höchstens einer Sicherungseinheit, deren Strompfad nicht durch ihr Sicherungsglied unterbrochen ist, gleichzeitig in ihrem zweiten Schaltzustand befinden.

Die erfindungsgemäße Sicherungsanordnung ist eine Überstromschutzeinrichtung für einen Gleichstrompfad und weist mehrere Sicherungseinheiten auf, die elektrisch parallelgeschaltet und redundant ausgeführt sind. Jede Sicherungseinheit weist ein Sicherungsglied auf, durch dessen "Auslösen" ein Strompfad der Sicherungseinheit dauerhaft unterbrochen werden kann. Um eine Sicherungseinheit in den Gleichstrompfad schalten zu können, weist jede Sicherungseinheit wenigstens ein Schaltglied auf. Durch die Steuereinheit der Sicherungsanordnung wird jeweils nur höchstens eine Sicherungseinheit in den Gleichstrompfad geschaltet, die noch nicht "ausgelöst" hat. Die erfindungsgemäße Sicherungsanordnung ermöglicht dadurch, eine Sicherungseinheit, die in den Gleichstrompfad geschaltet ist, nach dem Unterbrechen des Gleichstrompfades durch ihr Sicherungsglied durch eine andere Sicherungseinheit der Sicherungsanordnung zu ersetzen, indem die andere Sicherungseinheit in den Gleichstrompfad geschaltet wird. Dadurch kann der Betrieb des Gleichstrompfades auch nach einer durch einen Überstrom verursachten Unterbrechung des Gleichstrompfades fortgesetzt werden, ohne dasjenige Sicherungsglied auszuwechseln, durch das der Gleichstrompfad unterbrochen wurde.

Bei einer Ausgestaltung der erfindungsgemäßen Sicherungsanordnung weist jedes Sicherungsglied wenigstens eine Schmelzsicherung auf. Schmelzsicherungen sind insbesondere kostengünstig und eignen sich zum Unterbrechen von Gleichstrompfaden. Insbesondere kann ein Sicherungsglied mehrere Schmelzsicherungen aufweisen. Beispielsweise kann ein Sicherungsglied wie eine in WO 2022/233413 A1 offenbarte Gleichstrom-Schalteinrichtung mit mehreren Schmelzsicherungen ausgeführt sein.

Bei einer weiteren Ausgestaltung der erfindungsgemäßen Sicherungsanordnung ist jedes Schaltglied ein Leistungsschalter, ein Lastschalter oder ein Trennschalter. Derartig ausgeführte Schaltglieder sind auf dem Markt verfügbar und müssen daher nicht gesondert konstruiert werden.

Bei einer weiteren Ausgestaltung der erfindungsgemäßen Sicherungsanordnung ist jedes Schaltglied jeder Sicherungseinheit eingerichtet, automatisch seinen ersten Schaltzustand anzunehmen, wenn die Stromstärke des in dem Strompfad der Sicherungseinheit fließenden elektrischen Stroms einen zweiten Stromschwellenwert, der kleiner als der erste Stromschwellenwert ist, oder das Grenzlastintegral dieses Stroms einen zweiten Grenzlastschwellenwert, der kleiner als der erste Grenzlastschwellenwert ist, unterschreitet. Diese Ausgestaltung der erfindungsgemäßen Sicherungsanordnung berücksichtigt, dass auch nach dem von einem Überstrom verursachten "Auslösen" des Schaltgliedes einer Sicherungseinheit in dem Strompfad dieser Sicherungseinheit kurzzeitig noch ein geringer elektrischer Strom fließen kann.

Bei einer weiteren Ausgestaltung der erfindungsgemäßen Sicherungsanordnung weist der Strompfad jeder Sicherungseinheit zwei Schaltglieder auf, zwischen die das Sicherungsglied der Sicherungseinheit geschaltet ist.

Bei einer weiteren Ausgestaltung der erfindungsgemäßen Sicherungsanordnung weist jede Sicherungseinheit wenigstens einen Erdungsschalter auf, der einen ersten Schaltzustand, in dem der Erdungsschalter den Strompfad der Sicherungseinheit mit einem Erdpotential verbindet, und einen zweiten Schaltzustand, in dem der Erdungsschalter den Strompfad der Sicherungseinheit nicht mit einem Erdpotential verbindet, aufweist.

Bei einer weiteren Ausgestaltung der erfindungsgemäßen Sicherungsanordnung weist jede Sicherungseinheit für jedes ihrer Schaltglieder einen Erdungsschalter auf, der eingerichtet ist, einen Pol des Schaltglieds mit dem Erdpotential zu verbinden.

Bei einer weiteren Ausgestaltung der erfindungsgemäßen Sicherungsanordnung ist die Steuereinheit eingerichtet, die Schaltzustände der Erdungsschalter aller Sicherungseinheiten derart zu steuern, dass sich jeder Erdungsschalter einer Sicherungseinheit, in deren Strompfad ein elektrischer Strom fließt, in seinem zweiten Schaltzustand befindet, und sich alle anderen Erdungsschalter in ihrem ersten Schaltzustand befinden.

Die vorgenannten Ausgestaltungen der erfindungsgemäßen Sicherungsanordnung zielen darauf, ein gefahrloses Auswechseln des Schaltgliedes einer Sicherungseinheit zu ermöglichen, nachdem dieses Schaltglied "ausgelöst" hat. Zu diesem Zweck weist jede Sicherungseinheit wenigstens einen Erdungsschalter auf, um den Strompfad der Sicherungseinheit erden zu können. Die oben genannten Ausgestaltungen der erfindungsgemäßen Sicherungsanordnung mit zwei Schaltgliedern für jede Sicherungseinheit und einem Erdungsschalter für jedes Schaltglied berücksichtigen, dass infolge der Parallelschaltung der Sicherungseinheiten auch nach dem "Auslösen" des Sicherungsgliedes einer Sicherungseinheit in dem Strompfad dieser Sicherungseinheit oder einem Teil dieses Strompfades noch eine elektrische Spannung anliegen kann, die bei dem Auswechseln des Schaltgliedes dieser Sicherungseinheit gefährlich sein kann.

Bei einer weiteren Ausgestaltung der erfindungsgemäßen Sicherungsanordnung weist jede Sicherungseinheit wenigstens eine Strommesseinheit auf. Insbesondere kann jede Sicherungseinheit für jedes ihrer Schaltglieder eine Strommesseinheit aufweisen. Die Steuereinheit der Sicherungsanordnung ist eingerichtet, die Schaltglieder und/oder die Erdungsschalter der Sicherungsanordnung in Abhängigkeit von den Messwerten der Strommesseinheiten zu steuern.

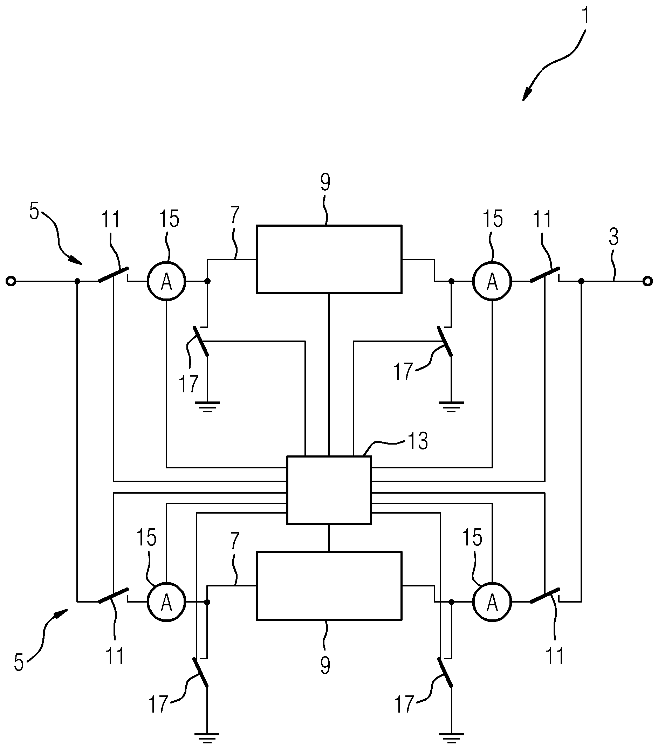

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

Die Zeichnung zeigt einen Schaltplan eines Ausführungsbeispiels einer Sicherungsanordnung 1 für einen Gleichstrompfad 3. Die Sicherungsanordnung 1 ist eine Überstromschutzeinrichtung für den Gleichstrompfad 3 und weist zwei Sicherungseinheiten 5 und eine Steuereinheit 13 auf. Die Sicherungseinheiten 5 sind elektrisch parallel zueinander geschaltet und gleichartig ausgebildet. Jede Sicherungseinheit 5 weist ein Sicherungsglied 9, zwei Schaltglieder 11, zwei Strommesseinheiten 15 und zwei Erdungsschalter 17 auf.

Die beiden Schaltglieder 11 und das Sicherungsglied 9 einer Sicherungseinheit 5 sind in einem Strompfad 7 der Sicherungseinheit 5 elektrisch in Reihe geschaltet, wobei das Sicherungsglied 9 zwischen die beiden Schaltglieder 11 geschaltet ist. Jede Strommesseinheit 15 der Sicherungseinheit 5 ist einem Schaltglied 11 zugeordnet und eingerichtet, einen zwischen dem Schaltglied 11 und dem Sicherungsglied 9 fließenden elektrischen Strom zu messen. Jeder Erdungsschalter 17 der Sicherungseinheit 5 ist ebenfalls einem Schaltglied 11 zugeordnet und weist einen ersten Schaltzustand, in dem der Erdungsschalter 17 den Strompfad 7 der Sicherungseinheit 5 mit einem Erdpotential verbindet, und einen zweiten Schaltzustand, in dem der Erdungsschalter den Strompfad 7 der Sicherungseinheit 5 nicht mit dem Erdpotential verbindet, auf. Dabei verbindet jeder Erdungsschalter 17 in seinem ersten Schaltzustand einen Pol des Schaltgliedes 11, dem er zugeordnet ist, mit dem Erdpotential.

Das Sicherungsglied 9 einer Sicherungseinheit 5 ist eingerichtet, den Strompfad 7 der Sicherungseinheit 5 dauerhaft zu unterbrechen, nachdem eine Stromstärke eines in dem Strompfad 7 fließenden elektrischen Stroms einen ersten Stromschwellenwert oder ein Grenzlastintegral dieses Stroms einen ersten Grenzlastschwellenwert überschritten hat. Zu diesem Zweck weist das Sicherungsglied 9 beispielsweise wenigstens eine Schmelzsicherung, vorzugsweise aber mehrere Schmelzsicherungen, auf. Beispielsweise sind die Sicherungsglieder 9 jeweils wie eine in WO 2022/233413 A1 offenbarte Gleichstrom-Schalteinrichtung ausgeführt.

Jedes Schaltglied 11 einer Sicherungseinheit 5 weist einen ersten Schaltzustand, in dem das Schaltglied 11 den Strompfad 7 der Sicherungseinheit 5 unterbricht, und einen zweiten Schaltzustand, in dem das Schaltglied 11 den Strompfad der Sicherungseinheit 5 nicht unterbricht, auf. Ferner ist jedes Schaltglied 11 einer Sicherungseinheit 5 eingerichtet, automatisch seinen ersten Schaltzustand anzunehmen, wenn die Stromstärke des in dem Strompfad 7 der Sicherungseinheit 5 fließenden elektrischen Stroms einen zweiten Stromschwellenwert, der kleiner als der erste Stromschwellenwert ist, oder das Grenzlastintegral dieses Stroms einen zweiten Grenzlastschwellenwert, der kleiner als der erste Grenzlastschwellenwert ist, unterschreitet. Die Schaltglieder 11 sind beispielsweise jeweils ein Leistungsschalter, ein Lastschalter oder ein Trennschalter.

Die Steuereinheit 13 ist eingerichtet, die Schaltzustände der Schaltglieder 11 und der Erdungsschalter 17 der Sicherungseinheiten 5 in Abhängigkeit von den Messwerten der Strommesseinheiten 15 zu steuern. Dabei steuert die Steuereinheit 13 die Schaltglieder 11 derart, dass sich die Schaltglieder 11 höchstens einer Sicherungseinheit 5 gleichzeitig in ihrem zweiten Schaltzustand befinden. Ferner steuert die Steuereinheit 13 die Erdungsschalter 17 der Sicherungseinheiten 5 derart, dass sich die Erdungsschalter einer Sicherungseinheit 5, in deren Strompfad 7 ein elektrischer Strom fließt, jeweils in ihrem zweiten Schaltzustand befinden, und sich die Erdungsschalter 17 der anderen Sicherungseinheit 5 jeweils in ihrem ersten Schaltzustand befinden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Sicherungsanordnung (1) für einen Gleichstrompfad (3), die Sicherungsanordnung (1) umfassend
- mehrere elektrisch parallel zueinander geschaltete Sicherungseinheiten (5), die jeweils einen Strompfad (7) mit einer Reihenschaltung eines Sicherungsgliedes (9) und wenigstens eines Schaltgliedes (11) aufweisen, und
- eine Steuereinheit (13), wobei
- das Sicherungsglied (9) jeder Sicherungseinheit (5) eingerichtet ist, den Strompfad (7) der Sicherungseinheit (5) dauerhaft zu unterbrechen, nachdem eine Stromstärke eines in dem Strompfad (7) fließenden elektrischen Stroms einen ersten Stromschwellenwert oder ein Grenzlastintegral dieses Stroms einen ersten Grenzlastschwellenwert überschritten hat,
- jedes Schaltglied (11) jeder Sicherungseinheit (5) einen ersten Schaltzustand, in dem das Schaltglied (11) den Strompfad (7) der Sicherungseinheit (5) unterbricht, und einen zweiten Schaltzustand, in dem das Schaltglied (11) den Strompfad der Sicherungseinheit (5) nicht unterbricht, aufweist, und
- die Steuereinheit (13) eingerichtet ist, die Schaltzustände der Schaltglieder (11) aller Sicherungseinheiten (5) derart zu steuern, dass sich alle Schaltglieder (11) höchstens einer Sicherungseinheit (5), deren Strompfad (7) nicht durch ihr Sicherungsglied (9) unterbrochen ist, gleichzeitig in ihrem zweiten Schaltzustand befinden.

2. Sicherungsanordnung (1) nach Anspruch 1, wobei jedes Sicherungsglied (9) wenigstens eine Schmelzsicherung aufweist.

3. Sicherungsanordnung (1) nach Anspruch 1 oder 2, wobei jedes Schaltglied (11) ein Leistungsschalter, ein Lastschalter oder ein Trennschalter ist.

4. Sicherungsanordnung (1) nach einem der vorhergehenden Ansprüche, wobei jedes Schaltglied (11) jeder Sicherungseinheit (5) eingerichtet ist, automatisch seinen ersten Schaltzustand anzunehmen, wenn die Stromstärke des in dem Strompfad (7) der Sicherungseinheit (5) fließenden elektrischen Stroms einen zweiten Stromschwellenwert, der kleiner als der erste Stromschwellenwert ist, oder das Grenzlastintegral dieses Stroms einen zweiten Grenzlastschwellenwert, der kleiner als der erste Grenzlastschwellenwert ist, unterschreitet.

5. Sicherungsanordnung (1) nach einem der vorhergehenden Ansprüche, wobei der Strompfad (7) jeder Sicherungseinheit (5) zwei Schaltglieder (11) aufweist, zwischen die das Sicherungsglied (9) der Sicherungseinheit (5) geschaltet ist.

6. Sicherungsanordnung (1) nach einem der vorhergehenden Ansprüche, wobei jede Sicherungseinheit (5) wenigstens einen Erdungsschalter (17) aufweist, der einen ersten Schaltzustand, in dem der Erdungsschalter (17) den Strompfad (7) der Sicherungseinheit (5) mit einem Erdpotential verbindet, und einen zweiten Schaltzustand, in dem der Erdungsschalter (17) den Strompfad (7) der Sicherungseinheit (5) nicht mit einem Erdpotential verbindet, aufweist.

7. Sicherungsanordnung (1) nach Anspruch 6, wobei jede Sicherungseinheit (5) für jedes ihrer Schaltglieder (11) einen Erdungsschalter (17) aufweist, der eingerichtet ist, einen Pol des Schaltgliedes (11) mit dem Erdpotential zu verbinden.

8. Sicherungsanordnung (1) nach Anspruch 6 oder 7, wobei die Steuereinheit (13) eingerichtet ist, die Schaltzustände der Erdungsschalter (17) aller Sicherungseinheiten (5) derart zu steuern, dass sich jeder Erdungsschalter (17) einer Sicherungseinheit (5), in deren Strompfad (7) ein elektrischer Strom fließt, in seinem zweiten Schaltzustand befindet, und sich alle anderen Erdungsschalter (17) in ihrem ersten Schaltzustand befinden.

9. Sicherungsanordnung (1) nach einem der vorhergehenden Ansprüche, wobei jede Sicherungseinheit (5) wenigstens eine Strommesseinheit (15) aufweist.

10. Sicherungsanordnung (1) nach einem der vorhergehenden Ansprüche, wobei jede Sicherungseinheit (5) für jedes ihrer Schaltglieder (11) eine Strommesseinheit (15) aufweist.
